# EUROPEAN PATENT APPLICATION

(11) **EP 1 176 816 A2**
(43) Date of publication of application: **30.01.2002**
(21) Application number: 01106322.9
(22) Date of filing: 15.03.2001
(51) Int. Cl.: H04N 5/445

(54) **Broadcasting receiving system and apparatus having a program reservation function, and program reservation terminal thereof**

(30) Priority: 27.07.2000 JP 2000227326
(71) Applicant: KABUSHIKI KAISHA TOSHIBA, Kawasaki-shi (JP)
(72) Inventor: Iwai, Keisuke, Toshiba K.K. Intellectual Property, Minato-ku, Tokyo 105-8001 (JP)
(74) Representative: HOFFMANN - EITLE

(57) **Abstract**

A television receiving apparatus (1A) and its remote controller (2A) are provided with storage medium slots (25 and 41), respectively. When a user enters program reservation data on a remote controller (2A), this program reservation data is stored in an external memory (3) via the storage medium slot (41). The user attaches this external memory (3) to the storage medium slot (25) of the television receiving apparatus (1A). The television receiving apparatus (1A) reads the program reservation data from the external memory (3) and specifies a broadcast program corresponding to the program reservation data from already received and stored EPG information. The television receiving apparatus (1A) registers reservation setting based on an information element representing this broadcast program.

## Description

The present invention relates to a broadcasting receiving system having a function which performs reservation settings such as recording reservation for, say, a television receiving apparatus and a video recorder using a terminal having a program reservation function such as a remote controller. The present invention also relates to a broadcasting receiving apparatus and a program reservation terminal used for this system.

Generally, a user uses a remote controller to perform recording reservation and the like for devices having a recording function such as a television receiving apparatus, a video tape recorder, a video disk recorder, and a personal computer. Basically, since the remote controller uses the IrDA (Infrared Data Association) compliant infrared transmission, an infrared signal is just available within a limited range reachable from each device itself such as a television receiving apparatus, a video tape recorder, and the like. For example, a user may want to receive program guide information from an Internet homepage using a personal computer installed in another room and to reserve a program by referencing the received program guide information. However, the use of a remote controller makes it impossible to reserve programs on a device in a different room.

On the other hand, Jpn. Pat. Appln. KOKAI Publication No. 2000-59717 discloses the technology for providing a television receiving apparatus with an IC card slot and using this television receiving apparatus to store recording reservation selected and specified by a user on an IC card based on EPG (Electric Program Guide) information.

However, this technology requires the IC card storing the recording reservation to be mounted on a video cassette. When this video cassette is inserted into the video tape recorder, an IC card reader in the video tape recorder reads the recording reservation data from the IC card for setting the reservation. Accordingly, a user needs to make recording reservation operations by watching on a television receiving apparatus's screen, making a reservation operation impossible, say, in a separated room or from a remote location.

As mentioned above, the conventional system causes a problem that a user's operation for reserving programs is limited to a place where the user can directly look at devices such as a television receiving apparatus, a video tape recorder, and the like.

It is an object of the present invention to provide a broadcasting receiving system, its broadcasting receiving apparatus and program reservation terminal so that a user can perform a program reservation operation anywhere for offering users greater convenience.

For implementing the above-mentioned object, the first invention is a broadcasting receiving system comprising a broadcasting receiving apparatus and a program reservation terminal for remotely controlling operations of this broadcasting receiving apparatus. The program reservation terminal comprises a first slot for a removable storage medium, program reservation input means for entering reservation data for a broadcast program, and external storage control means for storing reservation data entered by the program reservation input means in the removable storage medium via the first slot. On the other hand, the broadcasting receiving apparatus comprises a second slot for the removable storage medium, means for reading reservation data from the removable storage medium attached to this second slot, and reservation processing means for setting reservation to receive an intended broadcast program based on reservation data read from the removable storage medium.

According to the first invention, reservation data entered on the program reservation terminal is stored in a removable storage medium. When a user attaches this removable storage medium to the broadcasting receiving apparatus's slot, the reservation data is read from this removable storage medium. Based on this reservation data, the broadcasting receiving apparatus processes program reservation. Namely, the removable storage medium is used for transferring reservation data from the program reservation terminal to the broadcasting receiving apparatus. Consequently, it is possible to perform a program reservation in a separated room or from a remote location, offering users much greater convenience.

User-entered program reservation information is transferred from the program reservation terminal to the broadcasting receiving apparatus by using a removable storage medium. There is an advantage of transferring and setting a large amount of program reservation information at a time without providing the program reservation terminal with large-capacity nonvolatile memory.

Further, during program reservation, the broadcasting receiving apparatus selects a corresponding broadcast program from already stored broadcast program guide information based on the reservation data read from the removable storage medium. Even if the program reservation processing requires a plurality of information elements such as a receiving channel number, scheduled broadcast start and end times, and the like, the program reservation terminal can specify a reserved program just by entering part of information elements. This can simplify user's program reservation operations and decrease inadvertent settings.

Moreover, the broadcasting receiving apparatus or the program reservation terminal is provided with a function which converts the data format of reservation data to that of broadcast program guide information such as EPG. This eliminates the need for entering reservation data using a specified data format on the program reservation terminal, making it possible to use any data format within a possible conversion range. If any type of program reservation terminal is used, the broadcasting receiving apparatus is capable of correct program reservation setting in compliance with standard broadcast program guide information such as EPG.

With respect to the second invention, a removable storage medium already stores broadcast program guide information and is attached to a slot. The broadcast program guide information is read from this removable storage medium and is selectively displayed. A user specifies and enters an intended broadcast program based on the broadcast program guide information displayed by guide information display means. An information element representing this specified broadcast program is stored as reservation data in the removable storage medium via the slot.

According to the second invention, when the removable storage medium is attached to the program reservation terminal's slot, broadcast program guide information such as EPG already stored in this removable storage medium is read and is displayed on a program reservation terminal's display unit. A user can specify and enter a program based on the displayed broadcast program guide information without the need for referring to, say, program information publications or newspaper's TV listings. In addition, easy and accurate program reservation is available with an intended broadcast program displayed.

There can be several methods of storing broadcast program guide information in the removable storage medium. One is to store broadcast program guide information received from a broadcasting station in the broadcasting receiving apparatus. Another method is to download and store broadcast program guide information from, say, an Internet homepage using a network terminal such as a personal computer. Yet another method is to rent or purchase a removable storage medium storing the broadcast program guide information for a specified period from a broadcasting station and the like.

The third invention provides a program reservation terminal with a communication function for interacting with a communication network or a mobile communication network. Broadcast program guide information or simplified guide information is received and stored via the communication network or the mobile communication network. This received guide information is displayed. Based on the displayed guide information, a user specifies and enters intended broadcast programs individually.

Accordingly, the third invention enables program reservation operations from a separate room or a remote location, offering users much greater convenience. The invention uses mobile communication terminals such as a mobile telephone, a cordless telephone, and the like for program reservation terminals. The mobile communication terminal receives and displays program guide information via the mobile communication network. A user can easily acquire the broadcast program guide information anytime and anywhere without the need for referring to, say, program information publications or newspaper's TV listings or storing broadcast program information in the removable storage medium beforehand.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic illustration showing a broadcasting receiving system according to the present invention;
FIG. 2 is a circuit diagram showing a configuration of a television receiving apparatus according to a first embodiment of the present invention;
FIG. 3 is a circuit diagram showing a configuration of a remote controller according to the first embodiment of the present invention;
FIG. 4 is a flowchart showing a reservation control procedure and its contents for the remote controller in FIG. 3;
FIG. 5 is a flowchart showing a reservation acceptance control procedure and its contents for the television receiving apparatus in FIG. 2;
FIG. 6 is a circuit diagram showing a configuration of a television receiving apparatus according to a second embodiment of the present invention;
FIG. 7 is a circuit diagram showing a configuration of a remote controller according to the second embodiment of the present invention;
FIG. 8 is a flowchart showing a reservation control procedure and its contents for the remote controller in FIG. 7;
FIG. 9 is a flowchart showing a reservation acceptance control procedure and its contents for the television receiving apparatus in FIG. 6;
FIG. 10 is a circuit diagram showing a configuration of a mobile telephone terminal according to a third embodiment of the present invention; and
FIG. 11 is a flowchart showing a reservation control procedure and its contents for the mobile telephone terminal in FIG. 10.

### (First Embodiment)

The first embodiment of a broadcasting receiving system according to the present invention provides a storage medium slot for each of a television receiving apparatus and its remote controller. When a user enters program reservation data on the remote controller, the input data is stored in portable external memory via the storage medium slot. This external memory is attached to the storage medium slot of the television receiving apparatus. The television receiving apparatus reads the program reservation data from the external memory and specifies a broadcasting program based on this program reservation data and already received and stored EPG (Electric Program guide) data. The television receiving apparatus performs reservation setting based on information elements indicating this broadcast program.

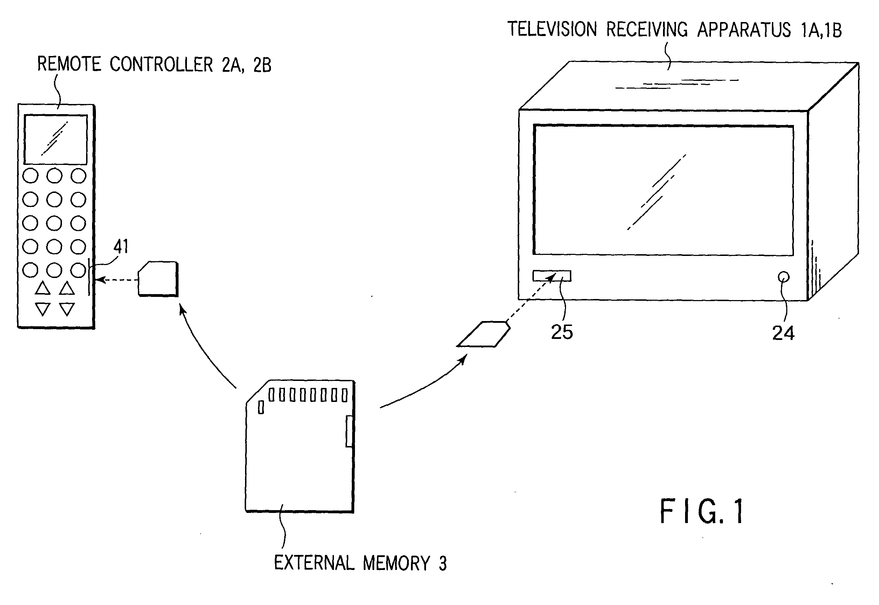

FIG. 1 is a schematic illustration showing a broadcasting receiving system according to the present invention.

This system comprises a television receiving apparatus 1A as a broadcasting receiving apparatus and a remote controller 2A as a program reservation terminal. The television receiving apparatus 1A and the remote controller 2A are each provided with storage medium slots 25 and 41, respectively. An external memory 3 can be attached or detached from these storage medium slots 25 and 41.

The external memory 3 has a card or stick shape using a nonvolatile storage element such as EEPROM capable of writing and reading at any time. Available storage capacities are, say, 4, 16, 64 megabytes, and the like. The external memory 3 stores program reservation data entered by a user using the remote controller 2A and is used for reading this reservation data in the television receiving apparatus 1A.

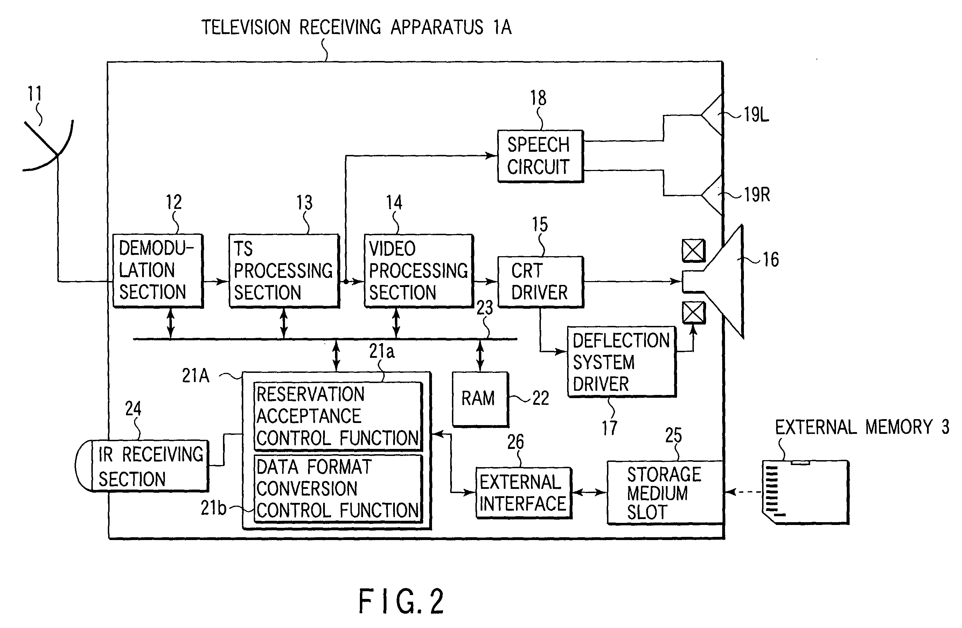

The television receiving apparatus 1A is configured as shown in the circuit diagram of FIG. 2.

In FIG. 2, a broadcast signal from a broadcasting station (not shown) is demodulated in a demodulation section 12 to reproduce a transport stream (TS). This transport stream is input to a TS processing section 13. The TS processing section 13 separates and extracts multiplexed picture data, speech data, and control data from the received transport stream.

The picture data is decoded in a video processing section 14 to be converted to an analog picture signal, is input to a CRT driver 15, and then is supplied to a CRT 16 from the CRT driver 15. A picture synchronization signal is input to a deflection system driver 17 from the CRT driver 15. The deflection system driver 17 drives a deflection coil.
Consequently, a received picture is displayed on the CRT 16. The speech data is decoded in a speech circuit 18 to be converted to an analog speech signal, and then is supplied to left and right speakers 19L and 19R for amplified output.

The received control data is supplied to a control section 21A via a bus 23 from the TS processing section 13. In the control section 21A, the control data is separated into appropriate types and is stored in RAM 22 as needed. For example, an EIT (Event Information Table) in the transport stream stores information needed for displaying the EPG information (hereafter referred to just as EPG information). This EPG information is separated and is stored in the RAM 22.

The EPG information contains information for representing, say, broadcast programs during a week. Each broadcast program is expressed with a first information element for specifying a program and a second information element for presenting program details.

The first information element comprises, say, a broadcast date and a program number. By contrast, the second information element contains, say, a service ID, an event ID, scheduled program start and end times, a scheduled program continuation time, a program name, a video/audio type (information specifying whether an aspect ratio is 4:3 or 16:9 and whether a speech channel is stereo or monaural), a program genre, a PPV (Pay Per View) charge, a program description (up to 400 characters), and copy control information.

According to a user operation, the control section 21A selects a specified broadcast program from the broadcast programs in a week. Further, the control section 21A extracts the first and second information elements corresponding to the selected broadcast program and displays it on the CRT 16 according to OSD (On Screen Display).

The television receiving apparatus 1A is provided with an IR receiving section 24 for receiving an infrared signal and a storage medium slot 25. The external memory 3 can be attached or detached from the storage medium slot 25. According to an instruction from the control section 21A, an external interface 26 reads stored data from the external memory 3 attached to the storage medium slot 25 and supplies this data to the control section 21A.

In addition to an ordinary control function associated with operations for receiving and displaying broadcast signals, the control section 21A is provided with new functions according to the present invention such as a reservation acceptance control function 21a and a data format conversion control function 21b.

The reservation acceptance control function 21a is provided with an IR reservation acceptance mode and an external memory reservation acceptance mode. When program reservation data is sent from the remote controller 2A using an infrared signal, the IR reservation acceptance mode is used for reserving a program based on the program reservation data and the program information of the EPG information displayed on the CRT 16.

When the external memory 3 is attached to the storage medium slot 25, the external memory reservation acceptance mode is used for reading the program reservation data stored in the external memory 3 via the external interface 26. The program reservation processing is performed based on this program reservation data and an information element for the broadcast program corresponding to the program reservation data in the EPG information already stored in the RAM 22.

During the program reservation processing, the data format of the input program reservation data may differ from that of the EPG information. In this case, the data format conversion means 21b performs conversion to the EPG information data format.

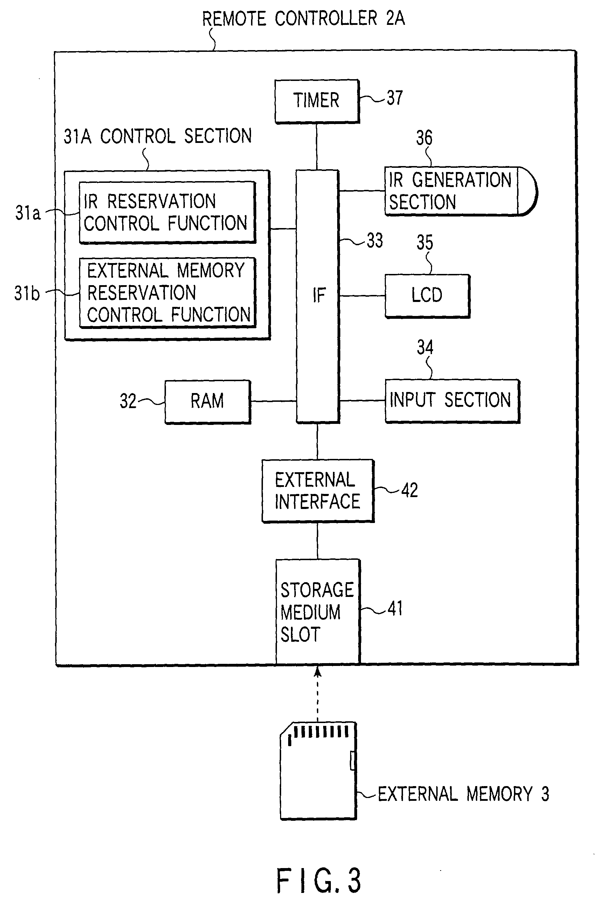

The remote controller 2A is configured as shown in the circuit diagram of FIG. 3.

The remote controller 2A is provided with a control section 31A comprising a microcomputer, RAM 32, an input section 34, a liquid crystal display (LCD) 35, an IR generation section 36, a timer 37, an interface (IF) 33 connecting among these, a storage medium slot 41, and an external interface 42.

The external memory 3 can be attached or detached from the storage medium slot 41. According to an instruction from the control section 31A, the external interface 42 writes program reservation data read from the RAM 32 to the external memory 3 attached to the storage medium slot 25.

The control section 31A is provided with an IR reservation control function 31a and an external memory reservation control function 31b as functions associated with program reservation. When a user enters program reservation data by operating the input section 34, the IR reservation control function 31a transmits this data from the IR generation section 36 using an infrared signal.

When a program reservation operation is performed with the external memory 3 attached to the storage medium slot 41, the external memory reservation control function 31b stores the input program reservation data in the external memory 3.

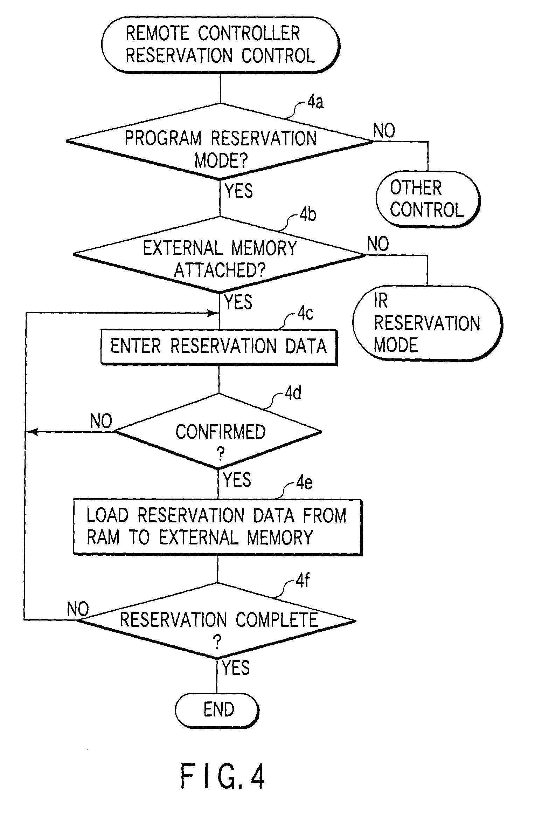

The following describes program reservation operations according to the thus configured system. FIG. 4 is a flowchart showing a reservation control procedure and its contents for the remote controller 2A. FIG. 3 is a flowchart showing a reservation acceptance control procedure and its contents for the television receiving apparatus 1A.

For program reservation, a user first sets the program reservation mode by operating the input section 34 on the remote controller 2A. When the control section 31A of the remote controller 2A detects the program reservation mode at step 4a, it then determines whether the external memory 3 is attached at step 4b. When the external memory 3 is not attached, the IR reservation mode is used for performing reservation control.

Now, it is assumed that the user attaches the external memory 3 to the storage medium slot 41 of the remote controller 2A for performing the program reservation in a room other than a room where the television receiving apparatus 1A is placed. Then, the control section 31A of the remote controller 2A shifts from steps 4b to 4c to accept program reservation data entered by the user.

In this state, the user enters the first information element for specifying a program to be reserved. As mentioned above, the first information element comprises, say, a broadcast date and a program number. Instead, it may be preferable to enter the broadcast date, the program number, and a program start time.

The control section 31A converts the input information element to a bit string having a specified remote controller data format and maintains it as the program reservation data in the RAM 32. Besides, the input information element is displayed on the LCD 35. When the user chooses a specific action on the input section 34 in this state, the control section 31A shifts from steps 4d to 4e. At this time, the program reservation data is read from the RAM 32 and is written to the external memory 3 via the external interface 42.

Thereafter, until the user performs an operation to terminate the reservation on the input section 34, the control section 31A repeats steps 4c to 4e for accepting and storing program reservation data.

Then, for registering the input program reservation data to the television receiving apparatus 1A, it is assumed that the user detaches the external memory 3 storing the program reservation data from the remote controller 2A, and then attaches the external memory to the storage medium slot 25 of the television receiving apparatus 1A. The control section 21A of the television receiving apparatus 1A detects attachment of the external memory 3 at step 5a to enter the external memory reservation acceptance mode. The control section 21A controls reservation acceptance processing thereafter.

Namely, at step 5b, the control section 21A reads program reservation data from the external memory via the external interface 26 and stores the read data in the RAM 22. At step 5c, the control section 21A checks whether the data format of the read program reservation data corresponds to that of the EPG information. When the determination results in a format mismatch, the data format of the read program reservation data is converted to that of the EPG information.

For example, it is assumed that the remote controller data format of the read program reservation data comprises the broadcast date and broadcast start time (aa bit) and the channel number (bb bit). This format is converted to generate a bit string comprising the broadcast date and broadcast start time (xx bit) and the service ID (yy bit) specified for the EPG information.

There may be the case where respective remote controllers 2A use different data formats for program reservation data. As a solution for this case, the control section 21A's memory maintains a conversion table listing the correspondence between the data format for program reservation data and that for the EPG information. When the data formats mismatch, the read program reservation data is converted to the EPG information's data format.

At step 5d, the control section 21A accesses the EPG information stored in the RAM 22 based on the program reservation data whose format is converted at step 5d. Here, a determination is made as to whether there exits a broadcast program corresponding to the program reservation data at step 5e. When the corresponding broadcast program exists, the control section 21A performs reservation setup processing for the program based on the first and second information elements representing this broadcast program at step 5f.

When this reservation setup processing terminates, the control section 21A displays each information element of the set broadcast program on the CRT 16 in an OSD manner at step 5g, notifying the user that the registration is complete. When the EPG information does not contain the broadcast program corresponding to the program reservation data, the control section 21A displays a message notifying this situation and the content of the program reservation data on the CRT 16 in an OSD manner.

As mentioned above, the first embodiment registers the broadcast program reservation setting in such a way that the external memory 3 is used to read program reservation data entered by the user on the remote controller 2A into the television receiving apparatus 1A. The user can carry the remote controller 2A into another room and perform input operations for reserving programs by referring to the program guide information obtained from a television guide on the newspaper or an Internet homepage using a personal computer.

The television receiving apparatus 1A is provided with the data format conversion function 21b for program reservation data. This function converts the data format of program reservation data entered from the remote controller 2A to the data format of the EPG information. Accordingly, even if respective remote controllers 2A use different data formats for program reservation data, it is possible to conform different formats to the EPG information data format.

### (Second Embodiment)

The second embodiment of a broadcasting receiving system according to the present invention provides a television receiving apparatus and its remote controller each with storage medium slots. When the television receiving apparatus receives and stores EPG information, this information is stored in external memory using the storage medium slot. The external memory is attached to a remote controller's storage medium slot for displaying the EPG information on the remote controller. In this state, user-entered program reservation data is stored in the external memory. When this external memory is attached to the television receiving apparatus's storage medium slot, the television receiving apparatus reads reservation data from the external memory. The reservation data and the EPG information are used for specifying a broadcast program. An information element indicating the broadcast program is used for reservation setup.

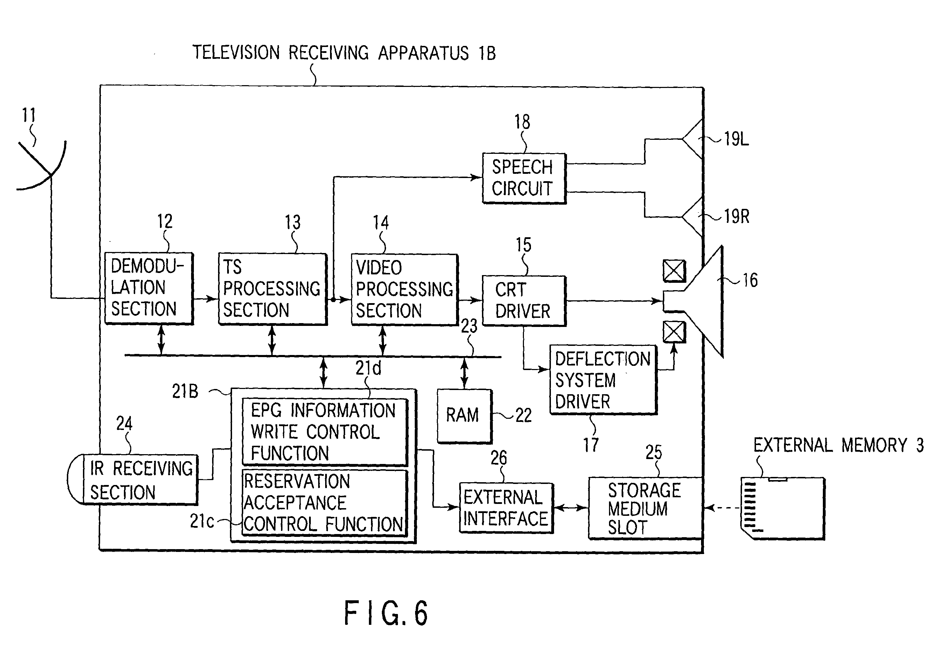

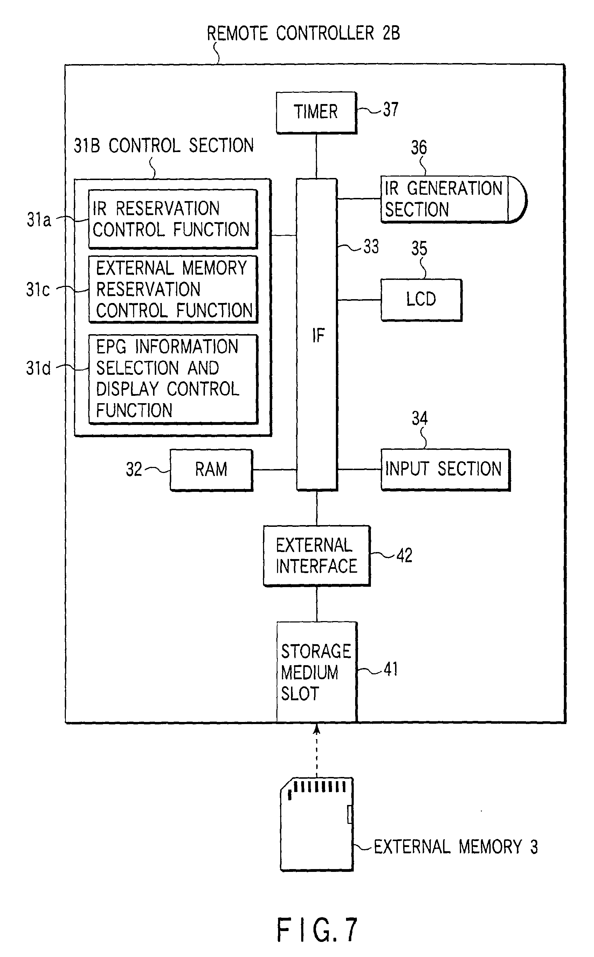

FIGS. 6 and 7 are circuit diagrams showing a configuration of a television receiving apparatus 1B and a configuration of a remote controller 2B according to the second embodiment of the present invention. The mutually corresponding parts in FIGS. 6 and 7 are designated by the same reference numerals as those in FIGS. 2 and 3. A detailed description is omitted for simplicity.

A control section 21B of a television receiving apparatus 1B is provided with a reservation acceptance control function 21c and an EPG information write control function 21d as control functions according to the present invention.

A reservation acceptance control function 21c is provided with an IR reservation acceptance mode and an external memory reservation acceptance mode. When program reservation data is sent from the remote controller 2A by using an infrared signal, the IR reservation acceptance mode performs program reservation processing based on the program reservation data and program information in the EPG information displayed on the CRT 16.

When the external memory 3 is attached to the storage medium slot 25 and a memory read mode is specified, the external memory reservation acceptance mode reads program reservation data stored in the external memory 3 via the external interface 26. The program reservation processing is performed based on this program reservation data and an information element for the broadcast program corresponding to the program reservation data in the EPG information already stored in the RAM 22.

When the external memory 3 is attached to the storage medium slot 25 and a memory write mode is specified, the EPG information write control function 21d reads the EPG information stored in the RAM 22 and writes it to the external memory 3. The EPG information can be written entirely. Alternatively, it can be also written in units of dates, time zones, or channels when a user specifies or enters a date, time zone, or channel in the EPG information.

A control section 31B of the remote controller 2B is provided with an IR reservation control function 31a, an external memory reservation control function 31b, and an EPG information selection and display control function as functions associated with program reservation. When a user enters program reservation data by operating the input section 34, the IR reservation control function 31a transmits this data from the IR generation section 36 using an infrared signal.

When the external memory 3 storing the EPG information is attached to the storage medium slot 41, the EPG information selection and display control function 31d reads a specified amount of the EPG information from the external memory 3 according to a user's scroll operation and displays the read information on an LCD 35.

While the external memory 3 is attached to the storage medium slot 41, the user may perform an operation for specifying program reservation based on the displayed EPG information. In this case, the external memory reservation control function 31b stores the EPG information of the specified program as program reservation data in the external memory 3.

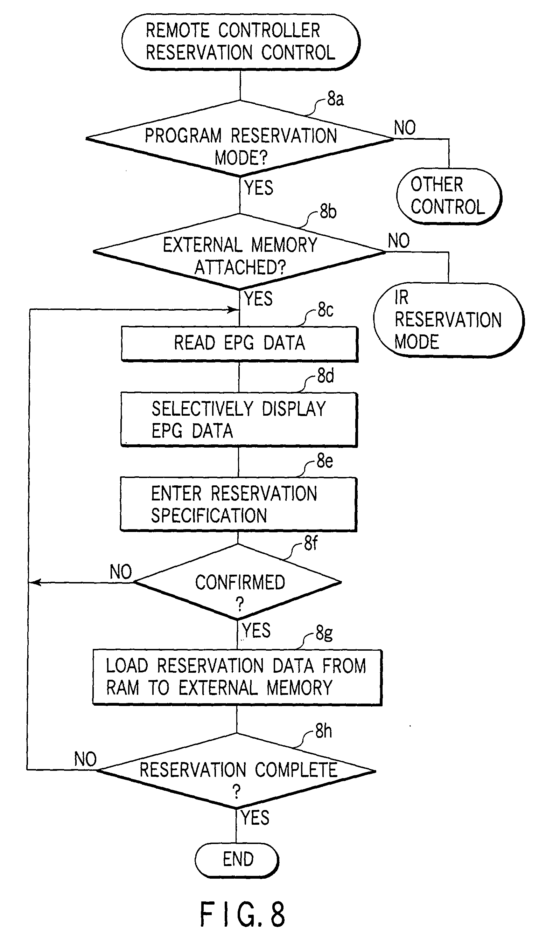

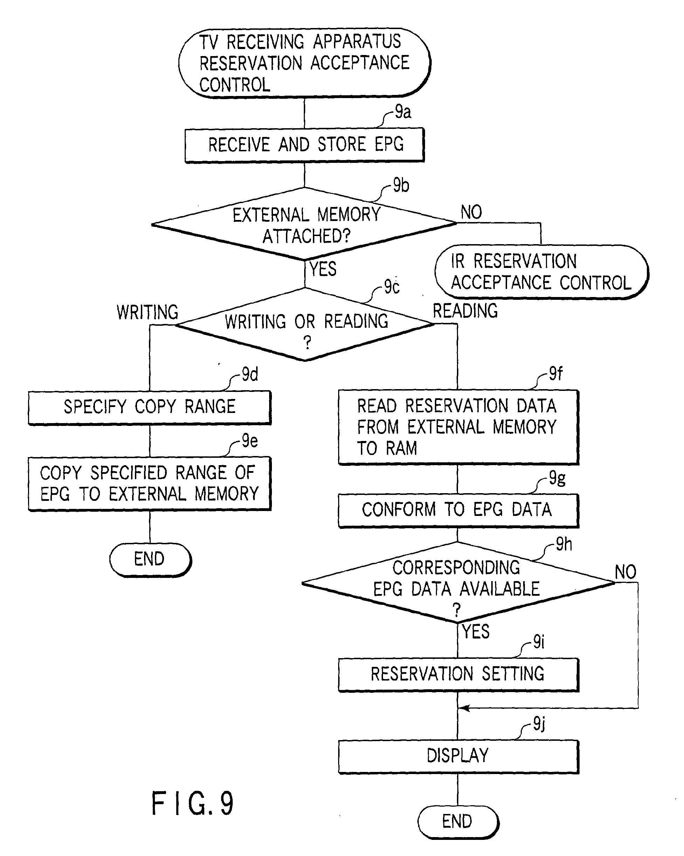

The following describes program reservation operations according to the thus configured system. FIG. 8 is a flowchart showing a reservation control procedure and its contents for the remote controller 2B. FIG. 9 is a flowchart showing a reservation acceptance control procedure and its contents for the television receiving apparatus 1B.

At step 9a, the control section 21B of the television receiving apparatus 1B extracts the EPG information described in the EIT from a received transport stream (TS) and stores this EPG information in the RAM 22. This operation is performed each time the EPG information is upgraded.

At step 9b, the control section 21B of the television receiving apparatus 1B checks if the external memory 3 is attached to the storage medium slot 25. When the external memory 3 is not attached, the control section 21B performs IR reservation acceptance processing. When the external memory 3 is attached, the control section 21B determines whether the write mode or the read mode is specified at step 9c.

In this state, it is assumed that the user specifies a write mode for writing the EPG information in the external memory 3. The control section 21B enters the memory write mode and proceeds to step 9d. Here, the EPG information stored in the RAM 22 is read and is displayed on the CRT 16. When the user specifies a range of EPG information to be written to the external memory 3, the specified range of EPG information is read from the RAM 22 and is written to the external memory 3 at step 9e.

After the EPG information is written to the external memory 3, it is assumed that the user attaches this external memory 3 to the storage medium slot 41 of the remote controller 2B. At step 8a, the control section 31B of the remote controller 2B checks if the program reservation mode is selected. At step 8b, the control section 31B checks if the external memory 3 is attached. When the program reservation mode is specified and the external memory 3 is attached, the control section 31B follows a user operation to read a specified amount of EPG information, say, on a program basis from the external memory 3 at step 8c. The read EPG information is displayed on the LCD 35 with scrolling at step 8d. Namely, the EPG information is displayed selectively.

In this state, it is assumed that the user uses, say, a cursor to select a program to be reserved from the programs displayed on the LCD 35. The control section 31B temporarily stores the EPG information about the specified program in the RAM 32 at step 8e. When the user commits the selection on the input section 34, control proceeds to step 8g from step 8f to write the temporarily stored EPG information as reserved data to the external memory 3. Apparently, the selected EPG information can be written as is to the external memory 3. Since the external memory 3 already stores the associated EPG information, it may be preferable to store flag information indicating completion of the reservation corresponding to the EPG information.

Until the user terminates the reservation on the input section 34 thereafter, the control section 31B repeats steps 8c to 8g for displaying the EPG information, accepting and writing the specified program for reservation.

For loading the reserved broadcast program to the television receiving apparatus 1B, the user detaches the external memory 3 from the remote controller 2B and attaches it to the storage medium slot 25 of the television receiving apparatus 1B. At step 9b, the control section 21B of the television receiving apparatus 1B detects attachment of the external memory 3. At step 9c, the control section 21B detects that the user specifies the read mode to enable the external memory reservation acceptance mode for controlling reservation setting thereafter.

At step 9f, the control section 21B reads the program reservation data from the external memory 3 via the external interface 26 and stores the read data in the RAM 22. At step 9g, the control section 21B accesses the EPG information stored in the RAM 22 based on the program reservation data. At step 9h, the control section 21B checks if there is a broadcast program corresponding to the program reservation data. If the corresponding broadcast program is available, the control section 21B performs reservation setup processing for the program based on the EPG information indicating this broadcast program at step 9i.

When terminating the reservation setup processing, at step 9j, the control section 21B displays an information element of the specified broadcast program on the CRT 16 in an OSD manner to notify the user of the successful setup. When the EPG information does not contain a broadcast program corresponding to the program reservation data, the control section 21A displays a message notifying this situation and the content of the program reservation data on the CRT 16 in an OSD manner.

The remote controller 2B reserves programs based on the EPG information read from the external memory 3. Accordingly, the program reservation data stored in the external memory 3 is given the data format of the EPG information. Therefore, the television receiving apparatus 1B needs not convert the program reservation data format to the EPG information format during the reservation setup processing.

Like the first embodiment, the second embodiment uses the external memory 3 to load program reservation data entered from the remote controller 2B into the television receiving apparatus 1B for reservation setting. The user can carry the remote controller 2A into another room and perform input operations for reserving programs by referring to the program guide information obtained from a television guide on the newspaper or an Internet homepage using a personal computer.

In addition, the second embodiment uses the external memory 3 to store the EPG information already received in the television receiving apparatus 1B. The external memory 3 is attached to the remote controller 2B for loading the EPG information to be displayed on the LCD 35. The user can correctly and easily reserve programs just by selecting the EPG information displayed on the LCD 35 of the remote controller 2B using a mouse pointer or a cursor. Since the external memory 3 already stores the EPG information, program reservation data can be represented with the EPG information. This eliminates the need for conversion of program reservation data formats on the television receiving apparatus 1B.

### (Third Embodiment)

The third embodiment of a broadcasting receiving system according to the present invention provides a television receiving apparatus and a mobile telephone terminal each with storage medium slots. The mobile telephone terminal is used for downloading a simplified program guide information from an Internet homepage and displaying it. Based on this simplified guide information, a user specifies a program and stores the corresponding program reservation data in the external memory via the storage medium slot. The user attaches this external memory to the storage medium slot on the television receiving apparatus. The television receiving apparatus reads the program reservation data from the external memory. Based on this program reservation data and already received and stored EPG information, the television receiving apparatus specifies the broadcast program and reserves it according to an information element presenting this broadcast program.

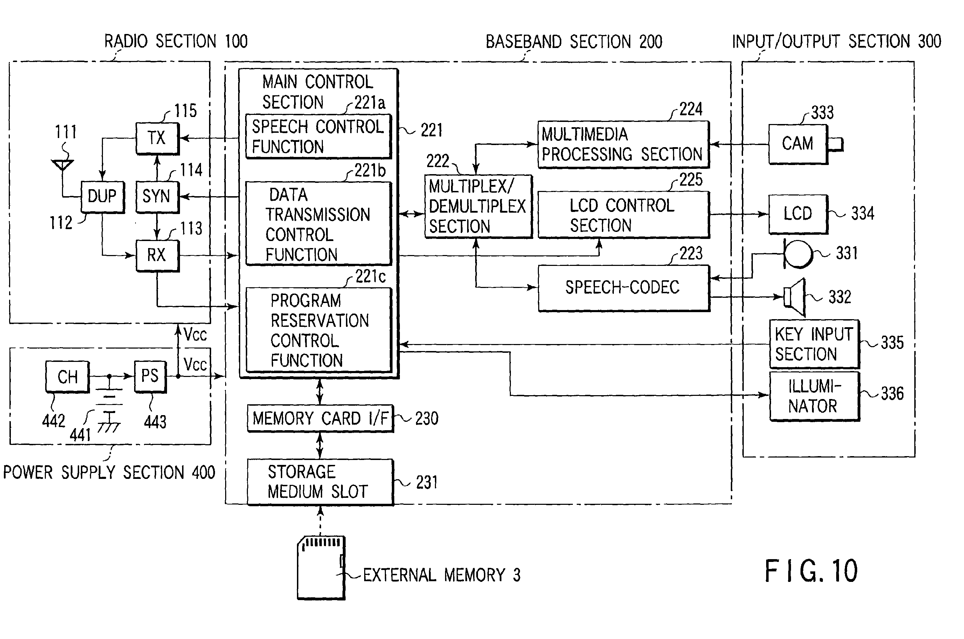

FIG. 10 is a circuit diagram showing a configuration of a mobile telephone terminal used as a program reservation terminal in the broadcasting receiving system according to the third embodiment of the present invention. The television receiving apparatus has the same configuration as that in FIG. 2, and description thereof is omitted here.

The mobile telephone terminal comprises a radio section 100, a baseband section 200, an input/output section 300, and a power supply section 400.

A radio frequency signal is transmitted from a base station (not shown) via a radio channel and is received at an antenna 111, then is input to a reception circuit (RX) 113 via an antenna duplexer (DUP) 112. The reception circuit 113 comprises a radio-frequency amplifier, a frequency converter, and a demodulator. The above radio signal is amplified in a low-noise amplifier. The signal is then mixed with a receiving local oscillation signal in a frequency converter, and is frequency converted to a receiving intermediate frequency or a receiving baseband signal. The output signal is digital demodulated in a demodulator. The above receiving local oscillation is generated from a frequency synthesizer (SYN) 114. The corresponding oscillation frequency is specified from a main control section 221 in the baseband section 200. Available demodulation schemes include, say, a reverse diffusion process using diffusion codes and the QPSK compliant IQ demodulation.

A demodulation signal output from the demodulator is input to the baseband section 200. The baseband section 200 comprises a main control section 221, a multiplex/demultiplex section 222, a speech-encoder/decoder (hereafter referred to as the speech-codec) 223, a multimedia processing section 224, an LCD control section 225, a memory card interface section (memory card I/F) 230, and a storage medium slot 231.

The main control section 221 checks if the demodulation signal is control information or multimedia information. If the signal is multimedia information, it is supplied to the multiplex/ demultiplex section 222 and is separated into speech data and video data here. The speech data is supplied to the speech-codec 223 and is decoded here. The reproduced speech signal is amplified and is output from a speaker 332 in the input/output section 300. The video data is supplied to the multimedia processing section 224 and is decoded here. The reproduced video signal is supplied to an LCD 334 for display in the input/output section 300 via the LCD control section 225.

The received video data is stored in the main control section 221's RAM as needed. The LCD 334 also displays various types of information output from the main control section 221. This information indicates the apparatus's operating states such as detected values for a telephone directory and a receiving electric field strength, a remaining battery capacity, and the like.

A user's speech signal output from an input/output section 3's microphone 331 is input to the baseband section 200's speech-codec 223, speech-coded here, and then is input to the multiplex/demultiplex section 222. A video signal output from the camera (CAM) 333 is input to the baseband section 200's multimedia processing section 224, video-coded here, and then is input to the multiplex/demultiplex section 222. The multiplex/demultiplex section 222 multiplexes the coded speech data and video data according to specified formats. The multiplexed transmission data is input to a transmission (TX) circuit 115 of the radio section 1 from the main control section 221.

The transmission circuit 115 comprises a modulator, a frequency converter, and a transmission power amplifier. The transmission data is digitally modulated in the modulator, and then is mixed with a transmitting local oscillation signal in the frequency converter to be frequency converted to a radio frequency signal. Modulation schemes to be used are the QPSK scheme as primary modulation and the coded diffusion modulation using diffusion codes as secondary modulation. The transmitting local oscillation signal is generated from the frequency synthesizer 114. The corresponding oscillation frequency is specified from the main control section 221 in the baseband section 200.

The transmission radio frequency signal output from the transmission circuit 115 is amplified in the transmission power amplifier to a specified transmission level. The amplified signal is supplied to the antenna 111 via the antenna duplexer 112 and is transmitted to the base station (not shown) from the antenna 111.

The power supply section 400 is provided with a battery 441 comprising, say, a lithium ion cell, a charging circuit 442 for charging the battery 441, and a voltage generation circuit (PS) 443. The voltage generation circuit 443 comprises, say, a DC/DC converter and generates a specified power voltage Vcc based on an output voltage from the battery 441.

The input/output section 300 is provided with an illuminator 336 for illuminating the LCD 334 and a key input section 335 during operation or communication. This illuminator 336 is called, say, a backlight or an illumination.

The memory card I/F 230 in the baseband section 200 provides the external memory 3 attached to the storage medium slot 231 with an interface function and an attachment state notification circuit. This attachment state notification circuit notifies the main control section 221 whether the external memory 3 is attached or not.

The main control section 221 contains a microprocessor, ROM, and RAM. This section is provided with a speech control function 221a, a data transmission control function 221b, and a program reservation control function 221c.

The speech control function 221a provides speech control after the radio channel establishes connection control or a communication link. The data transmission control function 221b downloads data from an Internet homepage, and the like.

The program reservation control function 221c uses the data transmission control function 221b to receive and store simplified program guide information from an Internet homepage and the like. According to a user operation, this simplified program guide information is displayed on the LCD 334 with scrolling. When the user performs an operation for reserving the displayed program, information representing this specified program is stored as program reservation data in the external memory 3.

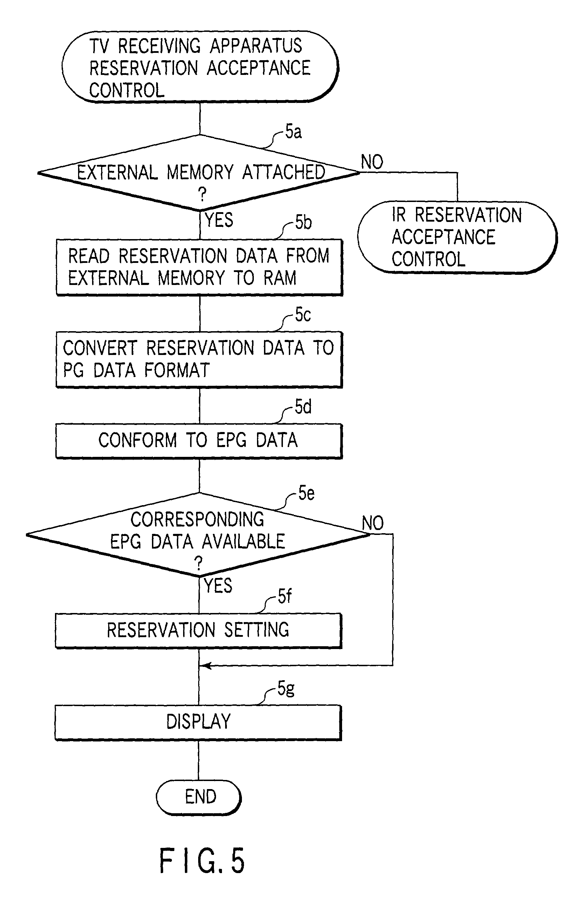

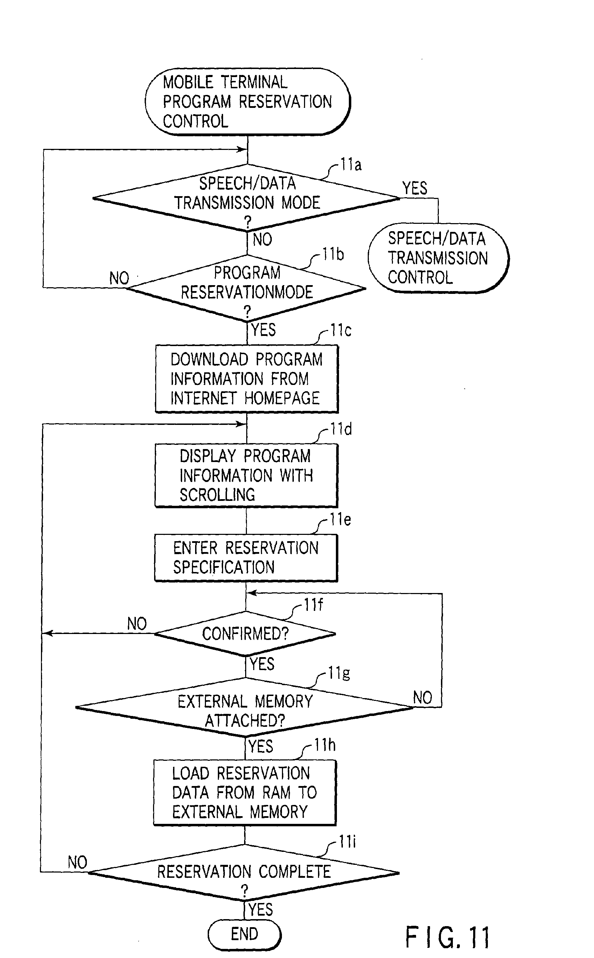

The following describes program reservation operations of the thus configured system. FIG. 11 is a flowchart showing a reservation control procedure and its contents for the mobile telephone terminal. the reservation control procedure and its contents for the television receiving apparatus 1A are same as those described in FIG. 5. Corresponding contents are explained with reference to FIG. 5.

In the wait state, the mobile telephone terminal's main control section 221 monitors whether a speech/data transmission mode is enabled and the program reservation mode is enabled at steps 11a and 11b, respectively.

In this state, it is assumed that a user enables the program reservation mode to reserve a program, say, at a remote location. At step 11c, the main control section 221 accesses a broadcasting station's homepage on the Internet, receives simplified program guide information from this homepage, and stores it in the RAM. The simplified program guide information represents a broadcast program using fewer information elements than those in the EPG information. For example, each broadcast program within a specified period is presented with a broadcasting date, scheduled broadcasting start and end times, a program number, or a channel number. Namely, the simplified program guide information comprises the above-mentioned first information element.

When the user performs an operation for displaying the stored simplified program guide information, the main control section 221 sequentially reads the simplified program guide information from the RAM and displays it on the LCD 334 with scrolling at step 11d.

In this state, the user selects a program to be reserved from those displayed on the LCD 334 by using a mouse pointer or a cursor. At step 11e, the main control section 221 temporarily stores an information element of the simplified program guide information representing the specified program in the RAM. When the user commits the selection on the key input section 335, control proceeds to step llg from step 11f. At this time, a determination is made as to whether the external memory 3 is attached to the storage medium slot 231. When the external memory 3 is already attached or the user attaches the external memory 3 to the storage medium slot 231 in this state, the stored simplified program guide information is written as program reservation data to the external memory 3 at step llh.

Thereafter, until the user performs an operation to terminate the reservation on the input section 334, the main control section 221 repeats steps 11d to 11h for displaying the simplified program guide information with scrolling, accepting and storing specification inputs for the program to be reserved.

For registering the reservation information about the input program to the television receiving apparatus 1A, it is assumed that the user detaches the external memory 3 storing the program reservation data from the mobile telephone terminal, and then attaches the external memory to the storage medium slot 25 of the television receiving apparatus 1A. The control section 21A of the television receiving apparatus 1A detects attachment of the external memory 3 at step 5a to enter the external memory reservation acceptance mode. The control section 21A performs the succeeding control.

Namely, at step 5b, the control section 21A reads program reservation data from the external memory via the external interface 26 and stores the read data in the RAM 22. At step 5d, the control section 21A converts the data format of the read program reservation data to that of the EPG information using, say, a conversion table. Thus, the simplified program guide information acquired on the mobile telephone terminal is converted to the conformed data format of the EPG information.

At step 5d, the main control section 221 accesses the EPG information stored in the RAM 22 based on the program reservation data whose format is converted. Here, a determination is made as to whether there exits a broadcast program corresponding to the program reservation data at step 5e. When the corresponding broadcast program exists, the main control section 221 performs reservation setup processing for the program based on a plurality of information elements representing this broadcast program at step 5f.

When this reservation setup processing terminates, the control section 21A displays each information element of the set broadcast program on the CRT 16 in an OSD manner at step 5g, notifying the user that the registration is complete. When the EPG information does not contain the broadcast program corresponding to the program reservation data, the control section 21A displays a message notifying this situation and the content of the expected program reservation data on the CRT 16 in an OSD manner.

As mentioned above, the third embodiment registers the reservation setting in such a way that the external memory 3 is used to read program reservation data entered on the mobile telephone terminal into the television receiving apparatus 1A. Accordingly, the user can specify and enter a program to be reserved using the mobile telephone terminal at a remote location, improving convenience.

Further, before the program reservation, the simplified program guide information downloaded from an Internet homepage and the like is displayed on the mobile telephone terminal's LCD 334. The user can correctly and easily reserve programs by referencing the simplified program guide information.

The television receiving apparatus 1A is provided with the data format conversion function 21b for program reservation data. This function converts program reservation data to the EPG information data format. The program reservation data comprises information elements of the simplified program guide information entered from the mobile telephone terminal. Even if data formats of the simplified program guide information depend on information providers, it is possible to conform all versions of program reservation data to the EPG information data format.

### (Other Embodiments)

The first and third embodiments use the television receiving apparatus 1A to convert data formats for program reservation data. It may be preferable to use the remote controller 2A or the mobile telephone terminal for the data format conversion. It may be also preferable to use the external memory 3 for the data format conversion by providing the external memory 3 with a table maintaining correspondence between program reservation data and the EPG information.

In the second embodiment, it is possible to decrease the amount of the EPG information to be stored in the external memory. For this purpose, it may be preferable to store only selected program names, or only specific genres, time zones, or favorite performers.

The above-mentioned embodiments have exemplified the television receiving apparatus as a broadcasting receiving apparatus. However, the present invention is also applicable to a video tape recorder, a video disk recorder such as a DVD recorder, and a personal computer equipped with a TV tuner. Further, the program reservation terminal is not limited to the remote controller or the mobile telephone terminal. It is also possible to use a digital camera, an audio player, a watch, and the like.

The external memory can be any nonvolatile memory capable of reading and writing as needed. Available examples are magnetic disks such as a floppy disk (registered trademark), optical disks such as a CD (Compact Disk) and an MD (Mini Disc), and IC memory cards using flush memory such as SSFDC (Solid State Floppy Disk Card or SmartMedia (TM)) and SD memory.

It is further understood by those skilled in the art that various changes and modifications may be made in the present invention without departing from the spirit and scope thereof with respect to the broadcasting receiving apparatus configuration, types and configurations of program reservation terminals such as the remote controller and the mobile telephone terminal, and the program reservation control procedures and contents thereof.

## Claims

1. A broadcasting receiving system comprising a broadcasting receiving apparatus (1A, 1B) for receiving a broadcast signal transmitted from a broadcasting station; and
a program reservation terminal (2A, 2B) for remotely controlling operations of said broadcasting receiving apparatus (1A, 1b), **characterized in that**
said program reservation terminal (2A, 2B) comprises:
a first slot (41) for a removable storage medium (3);
program reservation input means (34) for entering reservation data for a broadcast program; and
external storage control means (31b) for storing reservation data entered by said program reservation input means (34) in said removable storage medium (3) via said first slot (41), and
said broadcasting receiving apparatus (1A, 1B) comprises:
a second slot (25) for said removable storage medium (3) ;
means (26) for reading reservation data from said removable storage medium (3) attached to said second slot (25); and
reservation processing means (21a) for setting reservation to receive an intended broadcast program based on reservation data read from said removable storage medium (3).

2. The broadcasting receiving system according to claim 1, **characterized in that** said broadcasting receiving apparatus further comprises:
guide information acquisition means (12B) for acquiring and storing broadcast program guide information representing a plurality of broadcast programs to be broadcast within a specified period; and
storage control means (21d) for storing broadcast program guide information stored in said guide information acquisition means (21B) in said removable storage medium (3) attached to said second slot (25), and wherein
said program reservation terminal (2A, 2B) further comprises:
determination means (31c) for determining whether a removable storage medium (3) attached to said first slot (4) stores broadcast program guide information; and
guide information display means (31d) for, when said determination means (31c) determines that a removable storage medium (3) stores broadcast program guide information, reading and selectively displaying said broadcast program guide information from the removable storage medium (3).

3. The broadcasting receiving system according to claim 1, **characterized in that** said broadcasting receiving apparatus further comprises means (31B) for acquiring and storing broadcast program guide information which represents a plurality of broadcast programs each to be broadcast within a specified period through the use of a first information element for specifying a program and a second information element for indicating a program detail;
said program reservation input means (34) enters a first information element for specifying a broadcast program as reservation data; and
said reservation processing means (21a) reads first and second information elements representing a corresponding broadcast program out of said broadcast program guide information based on the first information element read from said removable storage medium (3) as reservation data and sets reservation to receive said broadcast program based on the first and second information elements.

4. A broadcasting receiving system comprising a broadcasting receiving apparatus for receiving a broadcast signal transmitted from a broadcasting station; and
a mobile communication terminal (4) for transmitting and receiving information with a communication apparatus via a mobile communication network, **characterized in that**
said mobile communication terminal (4) comprises:
guide information reception means (221b) for receiving broadcast program guide information representing a plurality of broadcast programs to be broadcast within a specified period via said communication network;
guide information display means (334) for displaying broadcast program guide information received by said guide information reception means (221);
a slot (231) for a removable storage medium (3);
program reservation input means (335) for entering reservation data of a broadcast program based on broadcast program guide information displayed on the guide information display means (334); and
external storage control means (230) for storing reservation data entered by said program reservation input means (335) in said removable storage medium (3) via said slot (231), wherein
said broadcasting receiving apparatus (1A, 1B) comprises:
a second slot (25) for said removable storage medium (3);
means (21c) for reading reservation data from said removable storage medium (3) attached to said second slot (25); and
reservation processing means (21c) for setting reservation to receive an intended broadcast program based on reservation data read from said removable storage medium (3).

5. A program reservation terminal (2A) used with a broadcasting receiving apparatus having a function of reading program's reservation data from a removable storage medium (3) and setting reservation to receive a corresponding broadcast program based on this reservation data, said program reservation terminal (2A, 2B) **characterized by** further comprising:
a slot (41) for a removable storage medium (3);
program reservation input means (34) for entering reservation data for a broadcast program; and
external storage control means (31b) for storing reservation data entered by said program reservation input means (34) in said removable storage medium (3) via said slot (41).

6. The program reservation terminal according to claim 5, **characterized by** further comprising determination means (42) for determining whether said removable storage medium (3) attached to said slot (41) stores broadcast program guide information representing a plurality of broadcast programs to be broadcast within a specified period; and
guide information display means (35) for, if said determination means (42) determines that broadcast program guide information is stored, reading and displaying said broadcast program guide information.

7. The program reservation terminal (2A, 2B) according to claim 6, **characterized in that** when an operation is performed to select a broadcast program in the broadcast program guide information displayed by said guide information display means (35), said program reservation input means (34) identifies information representing this selected broadcast program as reservation data.

8. The program reservation terminal (4) according to claim 5, **characterized by** further comprising communication means (100) for transmitting and receiving information with a communication apparatus via a communication network;
guide information reception means (221b) for receiving broadcast program guide information representing a plurality of broadcast programs to be broadcast within a specified period via said communication network; and
guide information display means (334) for displaying broadcast program guide information received by said guide information reception means (221b).

9. The program reservation terminal (4) according to claim 8, **characterized in that** when said broadcast program guide information indicates each broadcast program using a first information element for specifying programs and a second information element for providing a program detail, said guide information reception means (221b) receives simplified guide information containing only said first information element.

10. A program reservation terminal (2A, 2B) used with a broadcasting receiving apparatus (1A, 1B) having a function of storing broadcast program guide information representing a plurality of broadcast programs to be broadcast within a specified period, reading program's reservation data from a removable storage medium (3), and setting reservation to receive a corresponding broadcast program based on this reservation data and said broadcast program guide information, said program reservation terminal (2A, 2B) **characterized by** comprising:
a slot (4) for a removable storage medium (3);
program reservation input means (34) for entering first reservation data indicating a broadcast program;
conversion means (31B) for converting first reservation data entered by said program reservation input means (34) to second reservation data compliant with a data format for said broadcast program guide information; and
external storage control means (31c) for storing second reservation data obtained by said conversion means (21b) in said removable storage medium (3) via said slot (4).

11. A mobile communication terminal (4) **characterized by** comprising:
communication means (100) for transmitting and receiving information with a communication apparatus via a mobile communication network;
guide information reception means (221b) for receiving broadcast program guide information representing a plurality of broadcast programs to be broadcast within a specified period via said mobile communication network;
guide information display means (334) for displaying broadcast program guide information received by said guide information reception means (221);
a slot (231) for a removable storage medium (3);
program reservation input means (335) for entering reservation data of a broadcast program based on broadcast program guide information displayed on the guide information display means (334); and
external storage control means (221c) for storing reservation data entered by this program reservation input means in said removable storage medium (3) via said slot (231).

12. A broadcasting receiving apparatus (1A, 1B) used with a program reservation terminal (2A, 2B) having a function of storing user-entered reservation data for a broadcast program in a removable storage medium (3), said broadcasting receiving apparatus (1A, 1B) **characterized by** comprising:
a slot (25) for said removable storage medium (3);
means (26) for reading reservation data from said removable storage medium (3) attached to said slot (25); and
reservation processing means (21a) for setting reservation to receive an intended broadcast program based on reservation data read from said removable storage medium (3).

13. The broadcasting receiving apparatus (1A, 1B) according to claim 12, **characterized by** further comprising guide information acquisition means (21B) for acquiring and storing broadcast program guide information representing a plurality of broadcast programs to be broadcast within a specified period, wherein
said reservation processing means (21c) compares reservation data read from said removable storage medium (3) with broadcast program guide information obtained by said guide information acquisition means (21c) and, when the broadcast program guide information contains the corresponding broadcast program, sets reservation to receive said broadcast program.

14. The broadcasting receiving apparatus (1A, 1B) according to claim 13, **characterized in that** said reservation processing means (21c) compares reservation data read from said removable storage medium (3) with broadcast program guide information obtained by said guide information acquisition means (21B) and, when the broadcast program guide information does not contain the corresponding broadcast program, notifies a user of an appropriate message.

15. The broadcasting receiving apparatus according to claim 13, **characterized by** further comprising:
determination means (21A) for determining whether reservation data read from said removable storage medium (3) corresponds to a data format of said broadcast program guide information; and
format conversion means (21b) for, when said determination means (21A) determines that the reservation data does not match the data format of the broadcast program guide information, converting reservation data read from said removable storage medium (3) to a format corresponding to said broadcast program guide information's data format.
